# EUROPEAN PATENT APPLICATION

(11) **EP 1 460 744 A2**
(43) Date of publication of application: **22.09.2004**
(21) Application number: 04006423.0
(22) Date of filing: 17.03.2004
(51) Int. Cl.: H02J 7/00

(54) **Control device and method for a battery pack**

(30) Priority: 18.03.2003 JP 2003074175
(71) Applicant: YAMAHA HATSUDOKI KABUSHIKI KAISHA, Iwata-shi Shizuoka-ken (JP)
(72) Inventor: Kondo, Toshiro, Iwata-shi Shizuoka-ken (JP)
(74) Representative: Grünecker, Kinkeldey, Stockmair & Schwanhäusser Anwaltssozietät

(57) **Abstract**

The invention relates to a control device for a battery pack and method for controlling a battery pack.

The invention aims to suppress those variations in capacity among blocks into which a battery pack configured with a plurality of cells is divided at detection lines used to detect voltages of the cells which are caused by variations in current consumption among the blocks generated when currents flow through the detection lines.

The invention proposes circuits or elements configured to make the current values of the blocks other than the block having the highest current value equal to the current consumption of the block having the highest current value are interposed between the positive and negative terminals of the blocks other than the block having the highest current value.

## Description

The invention relates to a control device for a battery pack. Further the invention relates to a method for controlling a battery pack.

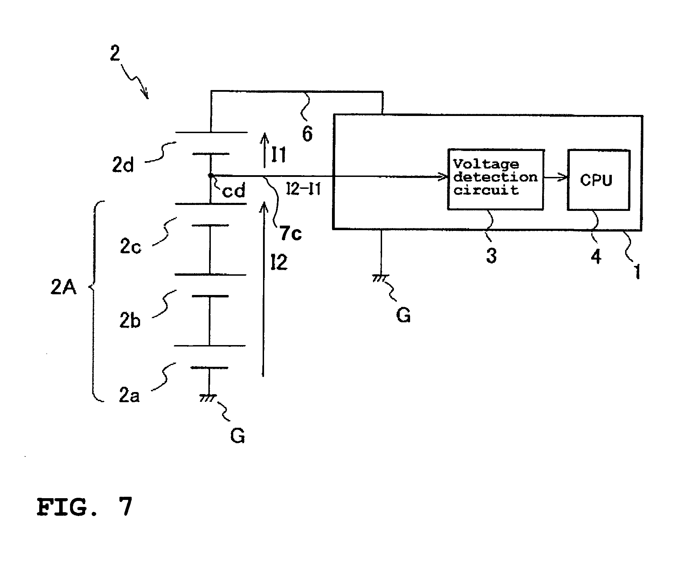

In a battery pack configured with a plurality of cells connected in series such as a lithium-ion battery, when the voltage of a cell is detected, variations in current consumption occur between upper and lower blocks divided at a detection line by the current flowing through the detection line and cause variations in capacity between the upper and lower blocks. That is, as shown in Fig. 7, when the voltage of a cell 2d of a battery pack 2 is detected with a voltage detection circuit 3 and a CPU (central processing unit) 4 installed on a control board 1, a current I1 flows through a cell 2d as an upper block divided at a detection line 7c and a current I2 flows through a cell group 2A as a lower block consisting of cells 2a, 2b and 2c because of the current (I2-I1) which flows through the detection line 7c. When a difference in current consumption occurs between the upper and lower blocks, variations in voltage occur among the cells. Here, a power source line 6 serves also as a detection line.

When such variations occur, since the usable capacities of the cells significantly decrease from_their real capacities, it is necessary to charge or discharge cells or blocks having a large capacity individually to correct the variations.

For this purpose, JP-A-Hei 06-253463 proposes that when variations in voltage among cells are detected, the variations are actively suppressed. This technique to balance the capacities, however, requires fine control of the cells and is thus complicated. Moreover, it allows the capacities of the cells to decrease in the first place, before it attempts to correct these resulting variations in capacity.

It is, therefore, an object of the invention to provide a control device for a battery pack and a method for controlling a battery pack in a more conserving way, so to eliminate the need to suppress variations in voltage or capacity among cells actively after the variations have occurred.

Preferably, the method for controlling a battery pack and the control device for a battery pack should prolong the lifetime of the battery pack.

For a control device for a battery pack, this objective is solved in an inventive manner by a control device for a battery pack which has a plurality of cells, the control device comprising a voltage detection circuit and at least one voltage detection line being connectable to a terminal of said cell of said battery pack, wherein a capacity variation suppressor device is connected to said at least one voltage detection line.

Further, for a method for controlling a battery pack, the objective is solved in an inventive manner by a method of controlling a battery pack, in particular while charging said battery pack, by suppressing variations in capacity among cells into which a battery pack configured at detection lines for detecting voltages of said cells which are caused by variations in current consumption among said blocks generated when currents flow through said detection lines by providing at least one circuit or element, and thereby making a current value of at least one block other than a block having a highest current value equal to the current consumption of said block having the highest current value, and by interposing said at least one circuit or element between said detection lines connected to a positive and a negative terminal of said block other than said block having the highest current value.

Providing such a device and method, it becomes possible to actively suppress the formation of variations in voltage among blocks or cells of a battery pack and, further, to eliminate the need to suppress such variations actively after the variations have occurred.

Moreover, according to the invention, the currents flowing through all the blocks and/or cells constituting a pack battery can be made equal to the highest current value by the installation of the capacity variation suppressor device in a predetermined position, in particular in the control device for the battery pack. Thus, the variations in the capacities among the blocks or cells of the battery pack can be eliminated.

Thereby, the charging of batteries can be improved and their lifetime can be prolonged.

Preferably, said capacity variation suppressor device is connected to said voltage detection line at a position between said terminal and said voltage detection circuit.

Further, preferably said capacity variation suppressor device is connected to all of a plurality of voltage detection lines.

Still further preferably, said capacity variation suppressor device comprises at least one circuit or element, capable of making a current value of at least one cell other than a cell having a highest current value equal to the current consumption of said cell having the highest current value.

Further preferably, said at least one circuit or element is interposed between voltage detection lines connected to a positive and a negative terminal of said at least one cell other than said cell having the highest current value.

Still further preferably, two circuits or elements are connected to the same detection line.

Preferably, a plurality of said circuits or elements are assigned to a plurality of cells of said battery pack. Thereby, it is possible that said cell consists of a plurality of single cells, such forming a block of cells.

Further preferably, said circuit or element comprises at least a constant current diode, a constant current circuit and/or a resistor.

Still further preferably, said control device further comprises a Central Processing Unit receiving a detection result of the voltage detection circuit and outputting a command for a next process.

Further preferably, a capacity variation suppressor device is capable of suppressing those variations in capacity among the cells into which the battery pack configured at detection lines for detecting voltages of said cells, which are caused by variations in current consumption among said cells generated when currents flow through said detection lines, in particular when charging said battery pack.

According to a further preferred embodiment, the method provides at least a constant current diode, a constant current circuit and/or a resistor for said circuit or element.

Preferably, a plurality of said circuits or elements are assigned to a plurality of cells of said battery pack. Further preferably, two circuits or elements are connected to the same detection line.

Further preferred embodiments are subject to the subclaims.

In the following, the invention will be explained in greater detail by means of embodiments thereof with reference to the accompanying drawings, wherein:
- Fig. 1: is a view illustrating the structure of a control device comprising a control board 1 including a capacity variation suppressor device 11 according to an embodiment of the present invention and a pack battery 2;
- Fig. 2: is a view illustrating the structure of a control device with a control board 1 including a capacity variation suppressor device 11' according to another embodiment of the present invention and a pack battery 2;
- Fig. 3: is a view illustrating a state before the capacity variation suppressor device 12 of a first example is installed;
- Fig. 4: is a view illustrating a state in which the capacity variation suppressor device 12 of the first example has been installed;
- Fig. 5: is a view illustrating a state before the capacity variation suppressor device 13 of a second example is installed,
- Fig. 6: is a view illustrating a state in which the capacity variation suppressor device 13 of the second example has been installed; and
- Fig. 7: is a view illustrating the structure of the control board not including a capacity variation suppressor device 11 and a pack battery 2.

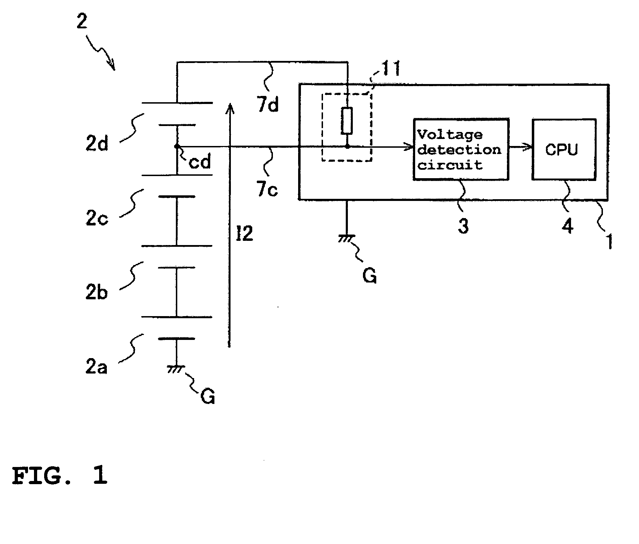

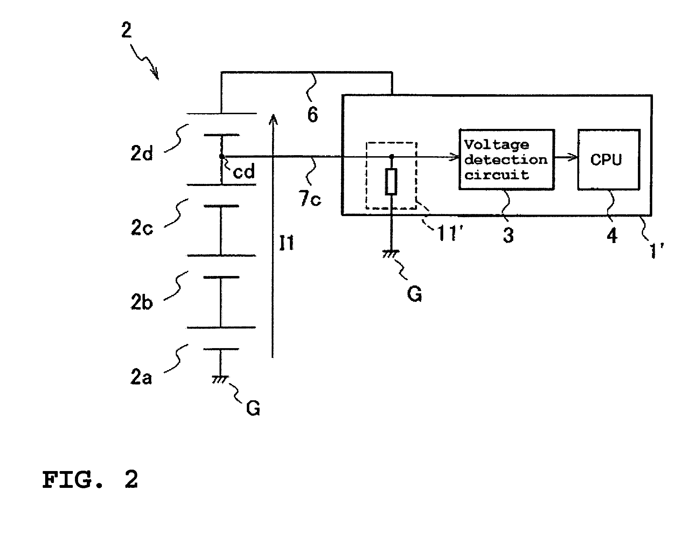

Description will be hereinafter made of embodiments of this invention with reference to Fig. 1 and Fig. 2.

Fig. 1 shows an embodiment to which this invention is applied when I2 is greater than I1 in Fig. 7, and is a view illustrating the structure of a control board 1 including a capacity variation suppressor device 11 according to an embodiment of this invention and a pack battery 2. Fig. 2 shows an embodiment to which this invention is applied when I1 is greater than I2 in Fig. 7, and is a view illustrating the structure of a control board 1 including a capacity variation suppressor device 11' and a pack battery 2.

The control board 1 shown in Fig. 1 is a board used to control the charge and discharge of the pack battery 2 and manage the capacity (residual quantity) of the pack battery 2. To the control board 1, a voltage detection circuit 3 for detecting the voltage of the pack battery 2, a CPU 4 which receives the detection result and outputs a command necessary to the next process, and the capacity variation suppressor device 11 as a feature of this embodiment are installed. The control board 1 is connected to the ground G.

The pack battery 2 is configured with four cells 2a, 2b, 2c and 2d connected in series in this embodiment. The negative terminal of the pack battery 2 is connected to the ground G and the positive terminal of the pack battery 2 is connected to the capacity variation suppressor device 11 via a detection line 7d which also serves as a power source line.

A voltage detection terminal cd is provided between the cells 2c and 2d, and a detection line 7c extends from the voltage detection terminal cd to a voltage detection circuit 3. The voltage of the cell 2d or the total voltage of the cells 2a, 2b and 2c (cell group 2A) can be detected using the detection line 7d and the detection line 7c.

The capacity variation suppressor device 11 has a circuit or element configured to make the current consumption of the cell 2d having a lower current value as shown in Fig .7 equal to the current value (I2) of the cell group 2A having a higher current value and interposed between the positive and negative terminals of the cell 2d on the control board 1. In other words, the capacity variation suppressor device 11 has a circuit or element configured to make the current value of the blocks (cell 2d) other than the block having the highest current value among the blocks (cell 2d and cell group 2A) equal to the current consumption of the block (cell group 2A) having the highest current value and interposed between the positive and negative terminals of the blocks (cell 2d) other than the block having the highest current value (cell group 2A).

In this embodiment, the capacity variation suppressor device 11 is provided in the predetermined position based on the premise that the voltages of the cells will include variations to some extent. It is thereby possible to suppress variations in voltage among the cells and eliminate the need to suppress such variations actively after the variations have occurred.

As has been described previously, according to this embodiment, the currents flowing through all the cells 2a, 2b, 2c and 2d constituting the pack battery 2 can be made equal to the higher current value I2 by the installation of the capacity variation suppressor device 11 in the predetermined position. Thus, the variations in the capacities among the cells can be eliminated.

When I1 is greater than I2 in Fig. 7, the currents must be made equal with the higher current value I1. Thus, the capacity variation suppressor device 11' configured to make the current consumption of the cell group 2A equal to that of the cell 2d is interposed between the positive and negative terminals of the cell group 2A on a control board 1'. In this case, the power source line 6 does not serve as a detection line.

Description will be made of examples which specifically implement the above embodiment.

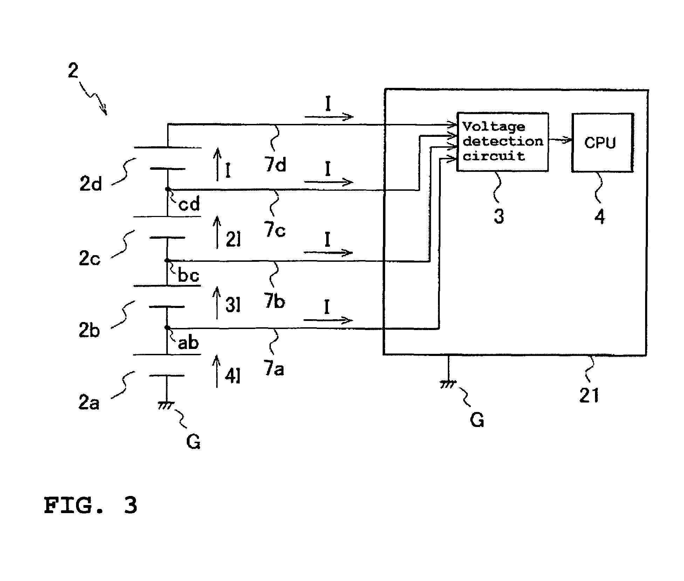

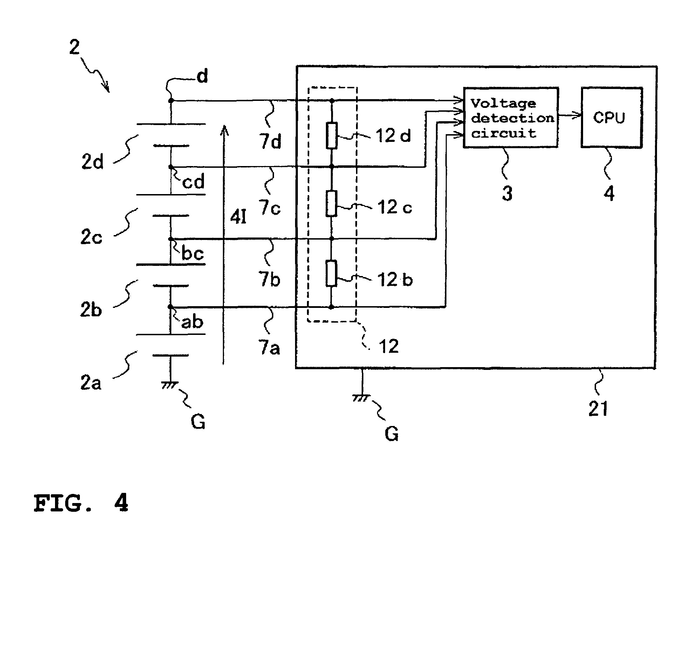

Referring to Fig. 3 and Fig. 4, a first example of this embodiment will be described.

The first example is a case where the load on each detection line is a constant-current load. Fig. 3 is a view illustrating the state before the capacity variation suppressor device 12 of this example is installed. Fig. 4 is a view illustrating the state after the capacity variation suppressor device 12 of this example has been installed. The same parts as those in the above embodiment are designated by the same numerals, and their description will be omitted.

As shown in Fig. 3, a voltage detection circuit 3 and a CPU 4 are installed on a control board 21. In this example, four detection lines 7a, 7b, 7c and 7d are provided to detect the voltages of all the four cells 2a, 2b, 2c and 2d. That is, a voltage detection terminal ab is provided between the cells 2a and 2b and the detection line 7a extends from the voltage detection terminal ab to the voltage detection circuit 3. A voltage detection terminal bc is provided between the cells 2b and 2c and the detection line 7b extends from the voltage detection terminal bc to the voltage detection circuit 3. A voltage detection terminal cd is provided between the cells 2c and 2d and the detection line 7c extends from the voltage detection terminal cd to the voltage detection circuit 3. The detection line 7d, which also serves as a power source line, extends from the positive terminal of the cell 2d to the voltage detection circuit 3. The voltage of the cell 2a can be detected with the ground G and the detection line 7a. The voltage of the cell 2b can be detected with the detection lines 7a and 7b. The voltage of the cell 2c can be detected with the detection lines 7b and 7c. The voltage of the cell 2d can be detected with the detection lines 7c and 7d.

In this example, the load on each of the detection lines 7a, 7b, 7c and 7d is a constant-current load (I) as described before. Before the capacity variation suppressor device 12 is installed, a current 4I (four times the current I), a current 3I (three times the current I), a current 2I (twice the current I), and a current I flow through the cells 2a, 2b, 2c and 2d, respectively.

In this example, the capacity variation suppressor device 12 configured to make the current consumption of the cells 2b, 2c, and 2d equal to that of the cell 2a is installed on the control board 12 as shown in Fig. 4. The capacity variation suppressor device 12 has three constant current elements, such as diodes 12b, 12c and 12d, for example. The constant current diode 12b is interposed between the positive and negative terminals of the cell 2b, the constant current diode 12c is interposed between the positive and negative terminals of the cell 2c, and the constant current diode 12d is interposed between the positive and negative terminals of the cell 2d. Constant current circuits may be used instead of the constant current diodes.

As has been described previously, according to this example, the currents flowing through all the cells 2a, 2b, 2c and 2d constituting the pack battery 2 can be made equal to the highest current value 4I by the installation of the capacity variation suppressor device 12 in the predetermined position. Thus, the variations in the capacities among the cells can be eliminated.

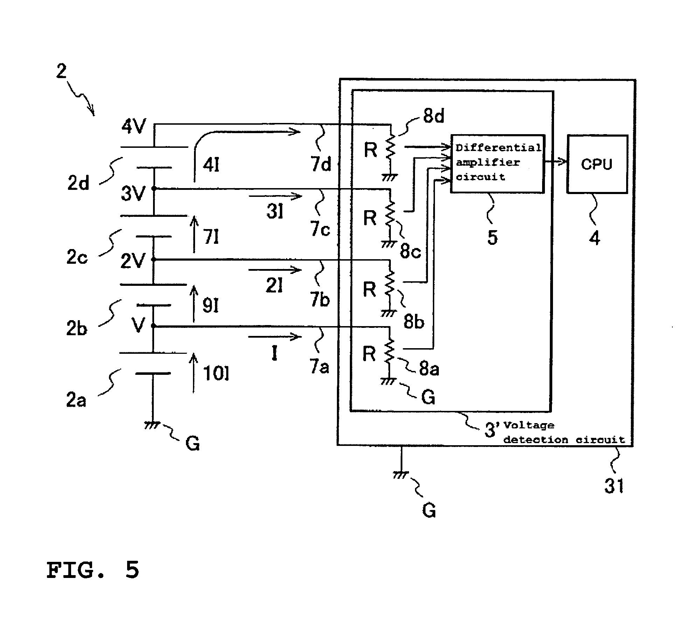

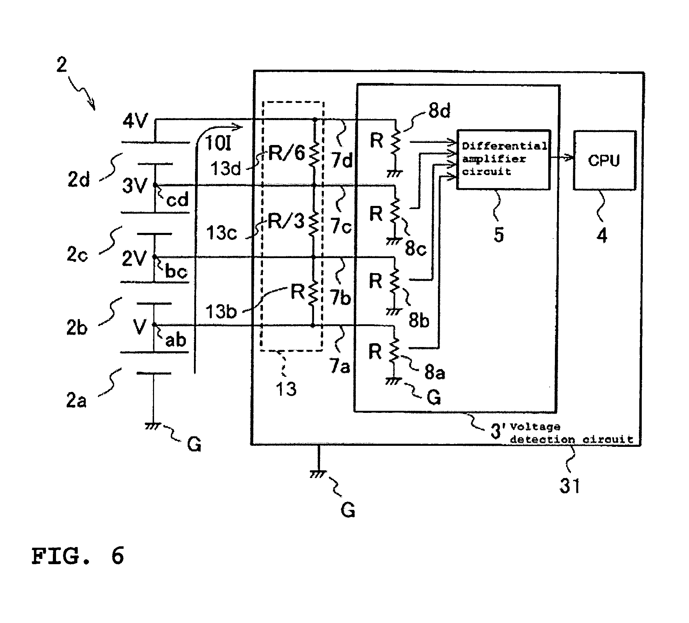

Referring to Fig. 5 and Fig. 6, a second example of this invention will be described.

The second example is a case where the load on each detection line is a constant-resistance load. Fig. 5 is a view illustrating the state before the capacity variation suppressor device 13 of this example is installed. Fig. 6 is a view illustrating the state after the capacity variation suppressor device 13 of this example has been installed. The same parts as those in the above embodiment and example are designated by the same numerals, and their description will be omitted.

As shown in Fig. 5, a voltage detection circuit 3' and a CPU 4 are installed on a control board 31. In this example, the voltage detection circuit 3' has a differential amplifier circuit 5 and four voltage-dividing resistors 8a, 8b, 8c and 8d having the same resistance R. The resistors are connected to the ground G. The differential amplifier circuit 5 can detect the voltages of the cells based on the divided voltages detected using the voltage-dividing resistors.

The voltages of the four cells 2a, 2b, 2c and 2d constituting the pack battery 2 are V, 2V (twice the voltage V), 3V (three times the voltage V) and 4V (four times the voltage V), respectively. Before the capacity variation suppressor device 13 is installed, the currents flowing through the four cells 2a, 2b, 2c and 2d are 101 (ten times the current I), 9I (nine times the current I), 7I (seven times the current I), and 4I (four times the current I), respectively, and the currents flowing through the four detection lines 7a, 7b, 7c and 7d are I, 2I (twice the current I), 3I (three times the current I), and 4I (four times the current I), respectively.

In this example, the capacity variation suppressor device 13 configured to make the current consumption of the cells 2b, 2c and 2d equal to that of the cell 2a is installed on the control board 31 as shown in Fig. 6. The capacity variation suppressor device 13 has three resistors 13b, 13c and 13d, for example. The resistor 13b has a resistance R and is interposed between the positive and negative terminals of the cell 2b. The resistor 13c has a resistance R/3 and is interposed between the positive and negative terminals of the cell 2c. The resistor 13d has a resistance R/6 and is interposed between the positive and negative terminals of the cell 2d.

As has been described previously, according to this example, the currents flowing through all the cells 2a, 2b, 2c and 2d constituting the pack battery 2 can be made equal to the highest current value 101 by the installation of the capacity variation suppressor device 13 in the predetermined position. Thus, the variations in the capacities among the cells can be eliminated according to a method of suppressing variations in capacities, as descnbed in detail above. Thereby, too, a method for charging a battery pack can be provided, wherein the cells of said battery pack may be charged according to their respective capacity.

As has been described previously, the currents flowing through all the cells constituting a pack battery can be made equal to the highest current value by the installation of the capacity variation suppressor device in a predetermined position. Thus, the variations in the capacities among the cells can be eliminated, according to a method for controlling a battery pack, in particular by suppressing variations in capacities, as described in detail above. Thereby, too, a method for charging a battery pack can be provided, wherein the cells of said battery pack may be charged according to their respective capacity.

Each of such a method may be performed by a control device as described beforehand.

As has been described previously, the currents flowing through all the cells constituting a battery pack can be made equal to the highest current value by the installation of the capacity variation suppressor device in a predetermined position. Thus, the variations in the capacities among the cells can be eliminated.

As further described above, in order to suppress those variations in capacity among blocks (2a to 2c and 2d) into which a pack battery 2 configured with a plurality of cells 2a to 2d is divided at detection lines used to detect voltages of the cells 2a to 2d which are caused by variations in current consumption among the blocks generated when currents flow through the detection lines, circuits or elements are proposed configured to make the current values of the blocks (2d) other than the block (2a to 2c) having the highest current value equal to the current consumption of the block (2a to 2c) having the highest current value are interposed between the positive and negative terminals of the blocks (2d) other than the block having the highest current value (2a to 2c).

## Claims

1. Control device for a battery pack (2) which has a plurality of cells (2a, 2b, 2c, 2d), the control device (1, 1', 21, 31) comprising:
a voltage detection circuit (3) and
at least one voltage detection line (7a, 7b, 7c, 7d) being connectable to a terminal (ab, bc, cd, d) of said cell (2a, 2b, 2c, 2d) of said battery pack (2), wherein a capacity variation suppressor device (11, 11', 12, 13) is connected to said at least one voltage detection line (7a, 7b, 7c, 7d).

2. Control device according to claim 1, **characterized in that** said capacity variation suppressor device (11, 11', 12, 13) is connected to said voltage detection line (7a, 7b, 7c, 7d) at a position between said terminal (ab, bc, cd, d) and said voltage detection circuit (3).

3. Control device according to claim 1 or 2, **characterized in that** said capacity variation suppressor device (11, 11', 12, 13) is connected to all of a plurality of voltage detection lines (7a, 7b, 7c, 7d).

4. Control device according to at least one of the claims 1 to 3 **characterized in that** said capacity variation suppressor device (11, 11', 12, 13) comprises at least one circuit or element (13b, 13c, 13d, 12b, 12c, 12d), capable of making a current value of at least one cell (2b, 2c, 2d) other than a cell (2a) having a highest current value equal to the current consumption of said cell (2a) having the highest current value.

5. Control device according to claim 4 **characterized in that** said at least one circuit or element (12b, 12c, 12d, 13b, 13c, 13d) is interposed between voltage detection lines (7a, 7b, 7c, 7d) connected to a positive and a negative terminal (ab, bc, cd, d) of said at least one cell (2a, 2b, 2c) other than said cell (2a) having the highest current value.

6. Capacity variation suppressor device according to claim 4 or 5, **characterized in that** two circuits or elements (12b, 12c, 12d, 13b, 13c, 13d) are connected to the same detection line (7b, 7c).

7. Control device according to at least one of the claims 4 to 6 **characterized in that** said a plurality of said circuits or elements (12b, 12c, 12d, 13b, 13c, 13d) are assigned to a plurality of cells (2b, 2c, 2d) of said battery pack (2).

8. Control device according to at least one of the claims 1 to 7 **characterized in that** said cell (2a, 2b, 2c, 2d) consists of a plurality of single cells, such forming a block (2A) of cells.

9. Control device according to at least one of the claims 4 to 8 **characterized in that** said circuit or element comprises at least a constant current diode (12b, 12c, 12d), a constant current circuit and/or a resistor (13b, 13c, 13d).

10. Control device according to at least one of the claims 1 to 9 **characterized by** further comprising a Central Processing Unit (CPU, 4) receiving a detection result of the voltage detection circuit (3) and outputting a command for a next process.

11. Control device according to at least one of the claims 1 to 10 **characterized in that** a capacity variation suppressor device (11, 11', 12, 13) is capable of suppressing those variations in capacity among the cells (2a, 2b, 2c, 2d) into which the battery pack (2) configured at detection lines (7a, 7b, 7c, 7d) for detecting voltages (V) of said cells (2a, 2b, 2c, 2d), which are caused by variations in current consumption among said cells (2a, 2b, 2c, 2d) generated when currents flow through said detection lines (7a, 7b, 7c, 7d), in particular when charging said battery pack (2).

12. Method for controlling a battery pack (2), in particular while charging said battery pack (2), by: suppressing variations in capacity among cells (2a, 2b, 2c, 2d) into which a battery pack (2) configured at detection lines (7a, 7b, 7c, 7d) for detecting voltages (V) of said cells (2a, 2b, 2c, 2d) which are caused by variations in current consumption among said blocks (2a, 2b, 2c, 2d) generated when currents flow through said detection lines (7a, 7b, 7c, 7d), by:
providing at least one circuit or element (12b, 12c, 12d, 13b, 13c, 13d), and thereby making a current value of at least one block (2b, 2c, 2d) other than a block (2a) having a highest current value equal to the current consumption of said block (2a) having the highest current value, and by
interposing said at least one circuit or element (12b, 12c, 12d, 13b, 13c, 13d) between said detection lines (7a, 7b, 7c, 7d) connected to a positive and a negative terminal (ab, bc, cd, d) of said block (2a, 2b, 2c) other than said block (2a) having the highest current value.

13. Method according to claim 12, **characterized by** providing at least a constant current diode (12b, 12c, 12d), a constant current circuit and/or a resistor (13b, 13c, 13d) for said circuit or element.

14. Method according to claim 12 or 13, **characterized in that** a plurality of said circuits or elements (12b, 12c, 12d, 13b, 13c, 13d) are assigned to a plurality of cells (2b, 2c, 2d) of said battery pack (2).

15. Method according to at least one of the claims 12 to 14, **characterized in that** two circuits or elements (12b, 12c, 12d, 13b, 13c, 13d) are connected to the same detection line (7b, 7c).
